# EUROPÄISCHE PATENTSCHRIFT

(11) **EP 1 415 496 B1**
(45) Veröffentlichungstag und Bekanntmachung des Hinweises auf die Patenterteilung: **03.11.2004**
(21) Anmeldenummer: 02747472.5
(22) Anmeldetag: 26.07.2002
(51) Int. Cl.: H04Q 7/38

(54) **VERFAHREN ZUR ÜBERTRAGUNG VON DATEN VON EINEM VERSENDER AN MEHRERE EMPFÄNGER**
METHOD FOR TRANSMITTING DATA FROM AN EMITTER TO A PLURALITY OF RECEIVERS
PROCEDE DE TRANSMISSION DE DONNEES D'UN EMETTEUR A PLUSIEURS RECEPTEURS

(30) Priorität: 07.08.2001 EP 01710038; 15.10.2001 DE 10150846
(43) Veröffentlichungstag der Anmeldung: 06.05.2004
(73) Patentinhaber: SIEMENS AKTIENGESELLSCHAFT, 80333 München (DE)
(72) Erfinder: BECKMANN, Mark, 38124 Braunschweig (DE); ECKERT, Michael, 38122 Braunschweig (DE); HANS, Martin, 31139 Hildesheim (DE); OTTE, Andreas, 29227 Celle (DE)
(86) Internationale Anmeldenummer: PCT/EP2002/008351
(87) Internationale Veröffentlichungsnummer: WO 2003/015439

(56) Entgegenhaltungen:
- WO-A-01/19029
- "3RD GENERATION PARTNERSHIP PROJECT; TECHNICAL SPECIFICATION GROUP RADIO ACCESS NETWORK; RADIO INTERFACE FOR BROADCAST/MULTICAST SERVICES (RELEASE 1999)" 3GPP TR25.925 V3.4.0 (2001-03), März 2001 (2001-03), Seiten 1-31, XP002191629 SOPHIA ANTIPOLIS FR
- "3RD GENERATION PARTNERSHIP PROJECT; TECHNICAL SPECIFICATION GROUP RADIO ACCESS NETWORK; BROADCAST/MULTICAST CONTROL BMC (RELEASE 4)" 3GPP TS25.324 V4.0.0 (2001-03), März 2001 (2001-03), Seiten 1-23, XP002191630 SOPHIA ANTIPOLIS FR

## Beschreibung

Die vorliegende Erfindung betrifft ein Verfahren zur Übertragung von Daten von einem Versender an mehrere Empfänger, eine Sende- und/oder Empfangseinheit und ein Kommunikationssystem.

Bei vielen in modernen Mobilfunksystemen angebotenen Diensten und Anwendungen sollen Nachrichten nicht nur zu einem, sondern zu zwei und mehreren Mobilfunkteilnehmern übertragen werden. Beispiele für solche Dienste und Anwendungen sind News-Groups, Video-Konferenzen, Video-On-Demand, verteilte Anwendungen usw.

Bei der Übertragung der Nachrichten zu den verschiedenen Teilnehmern ist es möglich, jedem Empfänger separat eine Kopie der Daten zuzusenden. Diese Technik ist zwar einfach zu implementieren, für große Gruppen jedoch ungeeignet. Da dieselbe Nachricht über Anzahl von N Empfängern Einzelverbindungen bzw. Unicast-Verbindungen übertragen wird und dabei mehrfach über gemeinsame Verbindungswege gesendet wird, benötigt dieses Verfahren eine sehr hohe Bandbreite.

Eine bessere Möglichkeit bietet die Multicast-Übertragung. Hierbei werden die verschiedenen Teilnehmer, denen dieselbe Nachricht übermittelt werden soll, zu einer Multicast-Gruppe zusammengefaßt und dieser eine Multicast-Adresse zugeordnet. Die zu übertragenden Daten werden daraufhin nur einmal an diese Multicast-Adresse gesendet. Über gemeinsame Verbindungswege vom Sender zu den Empfängern wird die MC-Nachricht im Idealfall nur einmal gesendet. Der Sender muß nicht wissen, wo und wie viele Empfänger sich hinter der Multicast Adresse verbergen.

Beim Broadcast werden Nachrichten an alle Teilnehmer innerhalb eines geographischen Gebietes gesendet. Ein solches Gebiet kann beispielsweise durch einen Teil des Gesamtnetzes bestimmt sein. Wie beim Multicast wird die Broadcast-Nachricht dabei über gemeinsame Verbindungswege vom Sender zu den Empfängern im Idealfall nur einmal gesendet. Jeder Teilnehmer muß an seinem Endgerät Einstellungen zur Freigabe vornehmen, sofern er nachfolgend Broadcast-Pakete von einer entsprechenden Broadcast-Gruppe auswerten will. Er kann so bestimmen, ob er alle Broadcast-Nachrichten empfangen oder verwerfen möchte, oder ob er nur bestimmte Nachrichten empfangen möchte.

Im Zuge eines bekannten Verfahrens zur Datenübermittlung wird zwischen einem Netzwerk und einem Mobilfunkgerät normalerweise innerhalb einer bestimmten Zeit immer eine bestimmte Menge von Frames ausgetauscht. Ein Frame ist dabei eine zeitliche Struktur, auf der z.B. im UMTS die gesamte Signalverarbeitung und Datenübertragung beruht, siehe auch [1].

Auβerdem offenbart die 3 GPP-Spezifikation TR25.925, "Radio Interface for Broadcast/Multicast-Services", Version 3.4.0, März 2001, Seiten 1-31 ein zweistufiges Verfahren im Rahmen eines Cell-Broadcast-Services.

Wenn alle diese Frames fortlaufend übertragen und vom Mobilfunkgerät empfangen werden, spricht man von fortlaufender Übertragung bzw. Continuous Reception. Es ist aber auch möglich, bei der Übertragung einen unterbrochenen Empfang bzw. eine sog. Discontinuous Reception DRX anzuwenden, um beispielsweise den Energiebedarf der Mobilfunkgeräte zu reduzieren. Bei Anwendung von DRX werden die Frames nicht fortlaufend übertragen und vom Mobilfunkgerät empfangen, sondern es werden bestimmte Frames ausgelassen. Es muß in diesem Modus jedoch mindestens eine bestimmte Untermenge aller Frames bzw. ein Subset der möglichen Frames übertragen werden, um die Verbindung aufrecht zu erhalten.

Der vorliegenden Erfindung liegt die Aufgabe zugrunde, ein Verfahren, eine Sende- und/oder Empfangseinheit und ein Kommunikationssystem zur effizienten, ressourcen- und energiesparenden Übertragung von Daten an eine Gruppe von Empfängern eines Punkt-zu-Mehrpunkt Dienstes zu schaffen. Insbesondere soll auch ein Einsatz im Rahmen eines Multimedia Broadcast/Multicast Service MBMS ermöglicht werden.

Diese Aufgabe wird erfindungsgemäß durch ein Verfahren mit den Merkmalen des Anspruchs 1 und eine Sende- und/oder Empfangseinheit mit den Merkmalen des Anspruchs 17 gelöst. Ferner ist ein Kommunikationssystem mit den Merkmalen von Anspruch 20 eine Lösung dieser Aufgabe. Die Unteransprüche definieren jeweils bevorzugte und vorteilhafte Ausführungsformen der vorliegenden Erfindung.

Ein erfindungsgemäßes Verfahren zeichnet sich dadurch aus, daß es in einem System mit einer mehrschichtigen Protokollarchitektur ein Punkt-zu-Mehrpunkt-Dienst als Erweiterung eines Broadcast Services CBS um eine Multimedia-Übertragung und/oder ein Multicast Service, vorzugsweise in Form eines Multimedia Broadcast/Multicast Service MBMS, bei Einteilung und/oder Planung eines Einsatzes von Systemressourcen und Einsatz einer Discontinuous Reception DRX ausgeführt wird. Damit wird eine Information in effizienter Form bei nur einmaliger Übertragung über den Punkt-zu-Mehrpunkt-Dienst versandt. Dabei wird im Rahmen der vorliegenden Erfindung unter einer Information auch eine im wesentlichen werbende oder ohne Aufforderung übersandte Information verstanden, insbesondere also ein Angebot, eine Werbeanzeige oder Werbung für ein Produktneuheit und Verbraucherinformation in sonstiger Form.

Bei komplexeren, mehrschichtigen Protokollarchitekturen, wie z.B. dem Protokollstapel im Universal Mobile Telecommunication System UMTS, sind Funktionen für eine nicht oder nicht nur regional definierte Gruppenübertragung bzw. Punkt-zu-Mehrpunkt-Übertragungen bislang nicht realisiert. Da UMTS ein wesentliches Einsatzfeld für die vorliegende Erfindung bildet wird nachfolgend, ohne Beschränkung der Erfindung auf diese Anwendung, mit der Darstellung eines Ausführungsbeispiels unter Bezugnahme auf die Abbildungen der Zeichnung auf die Protokoll-Struktur von UMTS eingegangen werden.

Die Planung für ein erfindungsgemäßes Verfahren wird vorteilhafterweise in zwei Stufen durchgeführt: In einer 1. Nachricht wird mitgeteilt wo, wie viele und wann Ressourcen für die Übertragung von Multicast Nachrichten zugewiesen werden. Diese Nachricht kann damit vorteilhafterweise sehr kurz sein. In der 1.Nachricht werden vorzugsweise Informationselemente mit einer Aussage darüber übertragen, welche Ressourcen der Transport-Kanäle oder welche Frames der physikalischen Kanäle für die Übertragung von Nachrichten reserviert oder zugewiesen werden. Vorteilhafterweise wird damit erst in der Planung zur Übertragung einer Nachricht signalisiert und damit festgelegt, welche physikalischen Kanäle und Transport-Kanäle für die Übertragung von Nachrichten genutzt werden. Damit ist ein erfindungsgemäßes Verfahren sehr flexibel anpaßbar. Unter UMTS wird ein Common Traffic Cannel CTCH in einer Ausführungsform der Erfindung nach Vorgabe durch den Versender auf andere Transport-Kanäle als den FACH und andere physikalische Kanäle als den S-CCPCH abgebildet.

Auf der Grundlage von Planungsnachrichten der Discontinuous Reception DRX werden verschiedene Protokollschichten durch die Funkressourcen-Kontrolleinheit RRC konfiguriert, bei unidirektionalen Verbindungen also durch die RRC eines Absenders. So wird auf einer physikalischen Ebene eines Empfängers bekannt gemacht, in welchen Ressourcen Daten einer MC Nachricht bzw. weitere Planungsnachrichten zu erwarten sind. Dabei enthalten die Nachrichten über eine Planung und/oder eine Zuweisung von Ressourcen in einer Weiterbildung der Erfindung eine Information über eine jeweilige Multicast Gruppe, so daß jeweils ganze Gruppen von Empfängern informiert werden. Vorzugsweise werden derartige Gruppen, insbesondere Multicast Gruppen durch eine MC Gruppen Adresse oder eine MC Gruppen Identität indiziert.

Besonders vorteilhafter Weise wird in einer Kontroll-Schicht eines Empfängers durch die Auswertung weiterer Informationen einer Nachricht entschieden, ob eine MC Nachricht mit Nutzdaten empfangen werden soll. So werden beispielsweise nur die Teilnehmer erreicht, die Sport-Nachrichten empfangen möchten, so daß durch die Verwendung dieser Gruppen-Identität ein unnötigen Lesen von Information und Daten von Teilnehmern, die sich nicht für die Nachrichten der entsprechenden Gruppe interessieren, sehr effektiv verhindert wird.

In einer ersten Stufe der Planung, MC DRX Level 1, wird signalisiert, welche physikalischen Kanäle und Transport-Kanäle für die Übertragung von MC Nachrichten genutzt werden. Mit anderen Worten werden die für die Übertragung von Punkt-zu-Mehrpunkt Diensten, insbesondere dem MBMS Dienst, genutzten oder reservierten Ressourcen zur Übertragung von Nachrichten und/oder Signalisierungsdaten mitgeteilt und/oder bekannt gemacht. Dies erfolgt vorzugsweise in der DRX Level 1 Nachricht. Es kann dem Teilnehmerendgerät auf diese Weise mitgeteilt werden, wann überhaupt Nachrichten bzw. Signalisierungsdaten, insbesondere die DRX Level 2 Nachrichten, übertragen werden. Ferner wird mitgeteilt, wo bzw. auf welchen Kanälen diese übertragen werden. In einer Weiterbildung wird auch eine grundlegende Spezifizierung der Nachrichten bzw. Signalisierungsdaten vorgenommen, zur Unterscheidung, ob es sich um CBS, Multimedia Broadcast oder Multicast handelt. Auf die Vorteile der jeweils mit einer Nachricht verbundenen Angabe über die Übertragungskanäle und die grundlegende Einstufung der Informationen, die zu erwarten sind, wird nachfolgend noch im Detail eingegangen werden. Aber schon unter Nutzung von UMTS ist es damit möglich, daß der CTCH nach Vorgabe durch den Versender auf andere Transport-Kanäle als den FACH und andere physikalische Kanäle als den S-CCPCH abgebildet wird.

Auf der Grundlage von Planungsnachrichten der Discontinuous Reception DRX werden verschiedene Protokollschichten durch die Funkressourcen-Kontrolleinheit RRC konfiguriert, insbesondere durch die RRC eines Empfängers. Dabei wird auf einer physikalischen Ebene bekannt gemacht, in welchen Ressourcen Daten einer MC Nachricht bzw. weitere Planungsnachrichten zu erwarten sind. Diese Nachrichten über eine Planung und/oder eine Zuweisung von Ressourcen enthalten eine Information über eine jeweilige Multicast Gruppe. In einer Kontrollschicht BMC wird durch die Auswertung dieser weiteren Informationen einer Nachricht u.a. zu einer Gruppenzugehörigkeit entschieden, ob eine MC Nachricht mit Nutzdaten empfangen werden soll. Diese Informationen werden vorzugsweise im Rahmen einer MC DRX Level 2-Nachricht mitgeteilt, die beinhaltet, auf welchen physikalischen Kanäle und Transport-Kanäle MC Nachrichten als Nutzdaten tatsächlich übertragen werden. Alternativ werden im Rahmen einer MC DRX Level 2-Nachricht auch bereits Nutzdateninhalte zusammen mit der Angabe über Ressourcen mitgeteilt, über die eine Multicast Nachrichten nachfolgend tatsächlich übertragen wird.

In einer bevorzugten Ausführungsform der Erfindung wird eine Zuweisung bzw. Bekanntmachung, wann tatsächlich MC Nachrichten auf Ressourcen physikalischer Kanäle und der Transport-Kanäle übertragen werden, auf der Basis zuvor zugewiesener Indizes vorgenommen, z.B. denen von Frames, wobei auch ein Offset zu einem ersten für eine MC Übertragung genutzten Frame und/oder eine Länge der CBS Planungs-Periode angegeben werden kann.

Vorzugsweise wird auch ein Informationselement zur Unterscheidung reservierter Ressourcen in Ressourcen für Broadcast- oder Multicast-Services übertragen, so daß ein erfindungsgemäßes Verfahren für beide Dienste einsetzbar ist.

Aufgrund der fortschreitenden Miniaturisierung wird ein erfindungsgemäßes Verfahren in einem Mobiltelefon als Sendeund/oder Empfangseinheit umgesetzt, wobei eine mobile Einheit vorzugsweise auch zum Versand und/oder Empfang mit Multimedia Nachrichten ausgebildet ist. Ein entsprechendes Kommunikationssystem kann aufgrund der vorstehend angedeuteten Flexibilität auch die relativ großen Datenmengen multimedialer Nachrichten bewältigen.

Die vorliegende Erfindung wird nachfolgend unter Bezugnahme auf die beigefügte Zeichnung anhand eines bevorzugten Ausführungsbeispiels erläutert.
- Fig. 1: zeigt ein vereinfachtes Strukturbild zur Darstellung eines Protokollstapels im UMTS;
- Fig. 2: zeigt ein Zuweisung von Frames zu einem logischen Kanal CTCH, über den die Übertragung von Cell Broadcast Nachrichten stattfindet;
- Fig. 3: stellt ein Index Schema dar, wie es für CBS DRX verwendet wird, um den Sets von Ressourcen bzw. Frames einen Index zuzuordnen;
- Fig. 4: zeigt das nach dem Stand der Technik genutzte Informationselement zur Signalisierung des CBS DRX Level 1 Information als Ausschnitt aus [3], und
- Fig. 5: stellt das nach dem Stand der Technik genutzte Informationselement zur Signalisierung der BMC Scheduling Message CBS DRX Level 2 als Ausschnitt aus [4] dar.

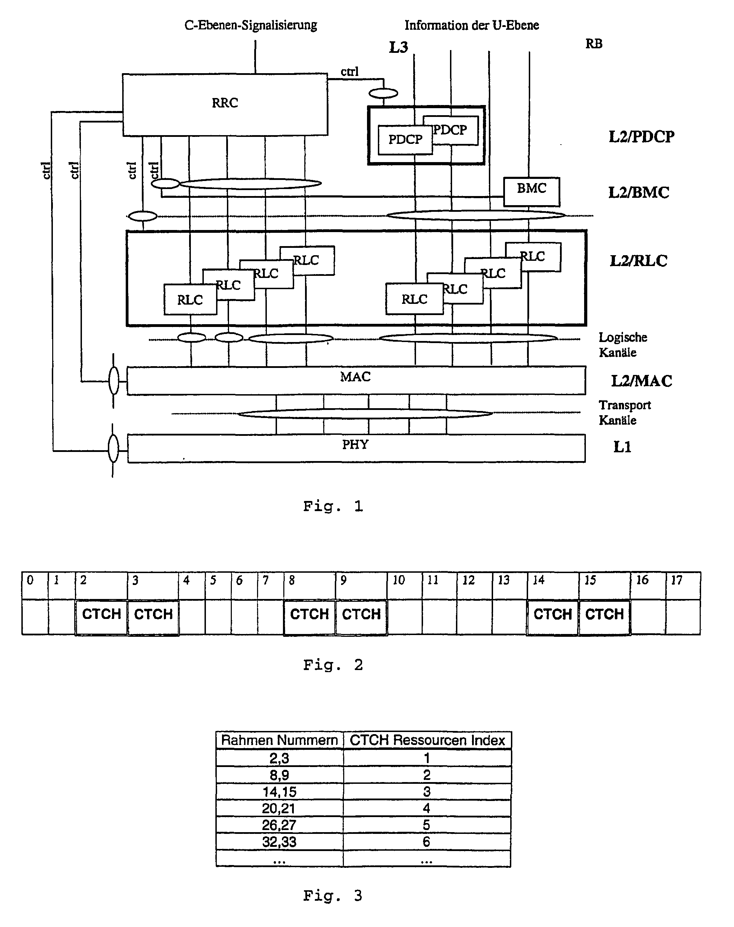

Ein Protokollstapel im Universal Mobile Telecommunication System UMTS ist mehrschichtiger aufgebaut und in die Bitübertragungs-, die Sicherungs- und die Vermittlungsschicht unterteilt. Die Sicherungsschicht zerfällt in die Unterschichten Medium Access Control MAC, Radio Link Control RLC, Packet Data Convergence Protocol PDCP und Broadcast/Multicast Control MBC, vgl. Abbildung von **Fig. 1.** Die Vermittlungsschicht besteht aus den beiden Teilen Radio Resource Control RRC und Duplication Avoidance, wobei nur die RRC-Schicht auch im UMTS Terrestrial Radio Access Network UTRAN endet. Die korrespondierende Instanz der Duplication Avoidance gehört nicht zum UTRAN, sondern ist in ein Core Network CN ausgelagert. In der Schicht L3 und der RLC-Schicht wird zwischen einer Nutzerebene N-Plane und einer Steuerungsebene C-Plane unterschieden, wobei die PDCP- und die BMC-Schicht ausschließlich zur Nutzerebene gehören. Ellipsen zwischen den Schichten symbolisieren die Orte der Dienstzugangspunkte für die Kommunikation mit der jeweiligen Partnerinstanz, wie in [2] festgelegt.

Die RRC-Schicht verwaltet und steuert die Nutzung der Funkbetriebsmittel und hat deshalb über Steuerdienstzugangspunkte Verbindungen zu allen anderen Schichten, um deren Konfiguration zu steuern. Diese Steuerdienstzugangspunkte dienen daher nicht der Kommunikation zwischen Partnerinstanzen, sondern ausschließlich zwischen Schichten desselben Protokollstapels. Die Verbindungen zwischen RRC und niedrigeren Schichten dienen dem Empfang von Meßwerten der Bitübertragungs- und der MAC-Schicht sowie dem Steuern von Funktionen in den einzelnen Schichten. Die RRC-Schicht bestimmt z.B. den Sollwert des inneren Kreises der Leistungsregelung, die in der Bitübertragungsschicht durchgeführt wird.

Die Übertragung über die Luftschnittstelle wird über s.g. physikalische Kanäle realisiert. Die Übertragungsdienste der Bitübertragungsschicht bzw. der physikalischen Schicht werden an den Dienstzugangspunkten über sog. Transportkanäle erbracht. Transportkanäle werden dadurch charakterisiert, wie die Daten übertragen werden. Die Übertragungsdienste der Kontroll- bzw. MAC-Schicht werden über die logischen Kanäle erbracht. Logische Kanäle werden dadurch charakterisiert, was für eine Art von Daten übertragen werden. Unterschieden werden dabei Kontrolldaten und Traffic- bzw. Nutzdaten.

Im Folgenden werden unterschiedliche logische Kanäle und Transport-Kanäle angesprochen und sollen deshalb nun kurz erläutert werden:

CBS-Nachrichten werden zwischen RLC und MAC über einen logischen Kanal mit der Bezeichnung Common Traffic Channel CTCH übertragen. Der CTCH dient zur Übertragung von Daten der Nutzerebene an alle Teilnehmer-Endgeräte UEs oder eine Gruppe von UEs. Der CTCH ist ein unidirektionaler Punkt-zu- Mehrpunkt-Kanal der Abwärtsstrecke, der auf einen Transport-Kanal bzw. Forward Access Channel FACH abgebildet wird. Der FACH ist ein gemeinsamer Transportkanal auf der Abwärtsstrecke, der zur Übertragung relativ kleiner Datenmengen dient. Der FACH wird daraufhin auf einen physikalischen Kanal mit der Bezeichnung Secondary Common Control Physical Channel S-CCPCH abgebildet. Grundsätzlich trägt der S-CCPCH Informationen des FACH und eines oder mehrerer Paging Cannels PCH. Der Primary CCPCH P-CCPCH überträgt die Informationen des BCH.

Der logische Kanal Broadcast Control Channel BCCH ist ein gemeinsamer Kanal der Abwärtsstrecke, auf dem Kontrolldaten an alle UEs in einer Funkzelle rundgesendet werden. Diese Kontrolldaten sind beispielsweise die System Information Blöcke SIB. Abgebildet wird der BCCH entweder auf den FACH oder auf den Broadcast Channel BCH.

Eine Übertragung von Daten bei unterbrochenem Empfang bzw. eine sog. Discontinuous Reception DRX ist eingangs bereits als eine bekannte Maßnahme beschrieben worden, um beispielsweise den Energiebedarf der Mobilfunkgeräte zu reduzieren. DRX wird unter anderem für den im UMTS spezifizierten Cell Broadcast Service CBS angewendet. Die System-interne Planung dazu, wann Frames bzw. Ressourcen für CBS Services zur Verfügung stehen und wann diese Ressourcen CBS Nachrichten transportieren, werden durch s.g. Scheduling-Informationen bekannt gemacht. Diese Planung ist in zwei Stufen realisiert:

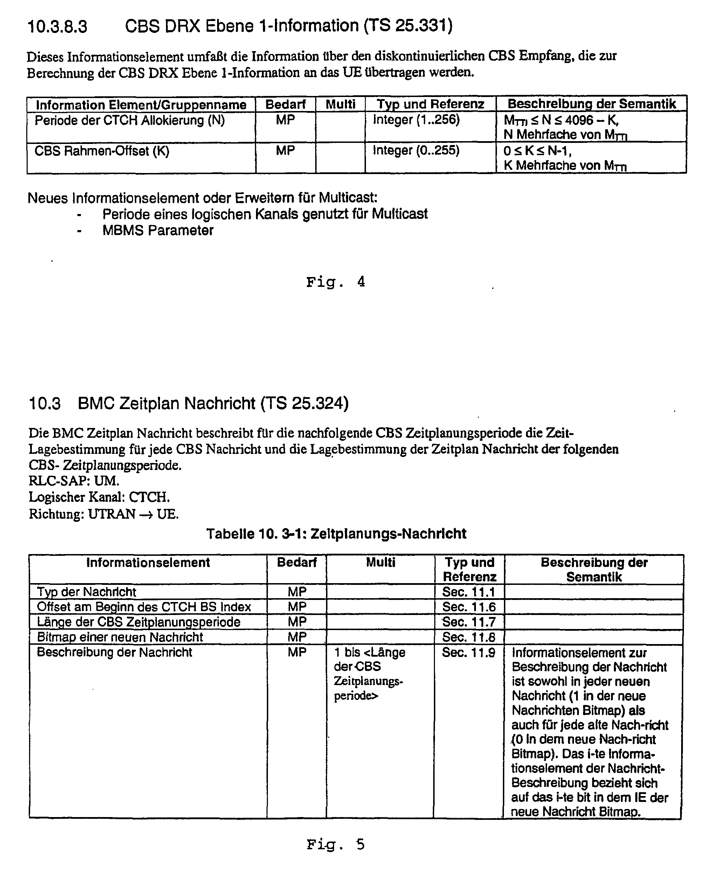

Die erste Stufe der Planung, CB DRX Level 1, soll signalisieren, welchen Ressourcen des Transport-Kanals FACH bzw. welche Frames des S-CCPCH überhaupt für die Übertragung von Cell Broadcast Nachrichten reserviert bzw. zugewiesen sind. Diese Signalisierung soll als Teil der System-Informationen zum RRC über den logischen Kanal BCCH übertragen werden. Es wird in der CB DRX Level 1 Nachricht mitgeteilt, wie viele und wann Frames für die Übertragung von Cell Broadcast Nachrichten zugewiesen sind. In der Abbildung von **Fig. 4** ist ein nach dem Stand der Technik genutztes Informationselement zur Signalisierung der CBS DRX Level 1-Information dargestellt. Nur in diesen Frames können dann CB-Nachrichten übertragen werden.

Die Abbildung von **Fig. 2** zeigt ein Beispiel für die Zuweisung von Frames zu dem logischen Kanal CTCH, über den die Übertragung von Cell Broadcast Nachrichten stattfindet. Es wird dort ein Offset von zwei Frames zu Frame Nr.0, eine Periodizität der allokierten Ressourcen von sechs Frames und eine Anzahl der aufeinanderfolgenden Frames von zwei angenommen. Ein Mobilfunkgerät UE, daß CB-Nachrichten empfangen möchte, muß nun nicht jeden Frame, sondern nur die Frames mit den Nummern 2/3, 8/9, 14/15 usw. auf ihren Inhalt überprüfen. Damit wird der Verarbeitungsaufwand und mithin auch der Energiebedarf innerhalb der UE gesenkt.

Für CBS DRX wird ein Index-Schema verwendet, das den Sets von Ressourcen bzw. Frames einen Index zuordnet, wie in der Abbildung von **Fig. 3** dargestellt. Die Zuweisung der Ressourcen in der darauf folgenden zweiten Stufe der Planung kann dann sehr einfach über diese Indizes erfolgen.

Für die zweite Stufe der Planung, CBS DRX Level 2, wird eine sog. Inband Scheduling Nachricht auf dem logischen Kanal CTCH zusammen mit der eigentlichen CB Nachricht übertragen und vom BMC ausgewertet. In dieser CBS DRX Level 2-Nachricht werden den UEs verschiedenen Information übermittelt, siehe Abbildung von **Fig. 5** mit der Darstellung eines nach dem Stand der Technik genutztes Informationselement zur Signalisierung der CBS DRX Level 2-Information. Die dargestellten Informationen umfassen unter anderem:
- Informationen, in welchen der in der CBS DRX Level 1 Nachricht bekannt gemachten Ressourcen tatsächlich CB Nachrichten übertragen werden, indiziert durch die verwendeten Ressourcen Indizes.
- Angegeben wir u.a. ein Offset zum ersten für die Übertragung von MC Nachrichten genutzten Frame und die Länge der CBS Planungs-Periode, das heißt, die Anzahl der aufeinanderfolgenden Ressourcen.
- Nachrichten Typ (CBS Nachricht oder Scheduling Nachricht)
- Nachrichten Identifikation (Identifikation der Quelle und Typ der CBS Nachricht)
- Seriennummer. (Information für UE, an der es erkennen kann, ob es eine bestimmte Nachricht bereits erhalten hat)
- Kodierungsschema (Information über die angewendete Kodierung und Sprache)

RRC und BMC tauschen über sog. Primitives u.a. Information über die Konfiguration der verschieden Ebenen und Einheiten aus.

Nach Erhalt einer entsprechenden Scheduling Nachricht informiert der BMC den RRC, ob diese die physikalische Ebene für den Empfang von CBS Nachrichten konfigurieren soll. RRC informiert den BMC daraufhin wiederum über die vorgenommen Einstellungen der CTCH Konfigurationen. Des weiteren werden u.a. Informationen über Messungen des Datenflusses ausgetauscht.

Für eine erfindungsgemäße Einführung einer Discontinuous Reception DRX für Multicast bzw. MC-Services insbesondere im UMTS werden die vorstehend beschriebenen Techniken mit dem Ziel adaptiert, die bereits für CB Services geschilderten Eigenschaften der Discontinuous Reception DRX auch für Multicast- bzw. MC-Services unter UMTS nutzen zu können. Ein erfindungsgemäßes Verfahren mit Nutzung einer Discontinuous Reception DRX für Multicast Services wird nachfolgend als MC DRX bezeichnet.

Die Planung für MC DRX, welche Ressourcen für MC Services zur Verfügung stehen und wann diese Ressourcen Multicast Nachrichten transportieren, wird, dem CBS vergleichbar, durch entsprechende Nachrichten bekannt gemacht. Die Nachrichten für die Planung und Zuweisung der Ressourcen enthalten dafür u.a. Information über die Multicast Gruppen. In einer Ausführungsform der die Multicast Gruppen durch eine MC Gruppen-Adresse oder eine MC Gruppen-Identität indiziert.

Die Planung für MC DRX, auf welchen physikalischen Kanälen oder Transport-Kanälen wann Frames bzw. Ressourcen für MC-Services zur Verfügung stehen und wann diese Ressourcen Multicast-Nachrichten transportieren werden durch s.g. "Scheduling Nachrichten" oder Planungsnachrichten bekannt gemacht. Auf der Grundlage dieser Planungsnachrichten werden die verschieden UMTS-Protokollschichten durch die Funkressourcen-Kontrolleinheit RRC konfiguriert. Damit ist bereits auf der physikalischen Ebene bekannt, in welchen Ressourcen überhaupt MC Nachrichten bzw. weitere Planungsnachrichten zu erwarten sind. Des weiteren kann die BMC Schicht durch die Auswertung weiterer Informationen entscheiden, welche MC Nachrichten wirklich empfangen werden sollen. Die Planung wird in zwei Stufen realisiert, wie nachfolgend beschrieben:

Die erste Stufe der Planung, MC DRX Level 1, signalisiert, welche physikalischen Kanäle und Transport-Kanäle für die Übertragung von Planungsinformationen zur Vorbereitung der Übertragung einer MC Nachrichten genutzt werden. Gegenüber dem CBS wird der CTCH für MC-Services nämlich auch optional auf andere Transport-Kanäle als den FACH und andere physikalische Kanäle als den S-CCPCH abgebildet. Des weiteren werden in der MC DRX Level 1-Nachricht Informationselemente übertragen, welche Frames der physikalischen Kanäle für die Übertragung weiterer Planungsinformationen reserviert bzw. zugewiesen sind.

Diese Signalisierung wird als Teil der System Informationen zum RRC über den logischen Kanal BCCH übertragen. Es wird in der MC DRX Level 1-Nachricht also mitgeteilt, wo, wie viele und wann überhaupt Ressourcen für die Übertragung von Multicast Nachrichten zugewiesen sind. Nur in diesen Frames können dann MC Nachrichten übertragen werden.

Für MC DRX kann erfindungsgemäß ein Index-Schema verwendet werden, daß den Sets von Ressourcen in Kombination mit den genutzten physikalischen Kanälen und Transport-Kanälen Indizes zuordnet. Die Zuweisung der Ressourcen in der darauf folgenden zweiten Stufe der Planung erfolgt dann sehr einfach über diese Indizes.

Für die zweite Stufe der Planung, MC DRX Level 2, wird eine s.g. "Inband Scheduling Nachricht" zusammen mit der eigentlichen MC-Nachricht übertragen und vom BMC ausgewertet. In dieser MC DRX Level 2-Nachricht werden den Teilnehmerendgeräten UE verschiedenen Information übermittelt. Dies sind unter anderem:
1. Informationen, auf welchen der in der MC DRX Level 1-Nachricht genannten physikalischen Kanäle und Transport-Kanäle tatsächlich MC Nachrichten übertragen werden;
2. Informationen, in welchen der in der MC DRX Level 1 Nachricht bekannt gemachten Ressourcen, tatsächlich Multicast Nachrichten übertragen werden;
3. Nachrichten Typ, also eine Unterscheidung zwischen MC Nachricht oder Scheduling Nachricht;
4. Nachrichten Identifikation (MC Gruppen Adresse bzw. MC Gruppen Identifikation, Identifikation der Quelle und Typ der MC Nachricht);
5. Serien-Nummer (Information für UE, an der es erkennen kann, ob es eine bestimmte Nachricht bereits erhalten hat);
6. Kodierungsschema (Information über die angewendete Kodierung und Sprache).

Dabei kann bei den vorstehend genannten Punkten 1. und 2. bei Nutzung des zuvor beschriebenen Index-Schemas erfindungsgemäß die Zuweisung bzw. Bekanntmachung, wann tatsächlich MC Nachrichten auf den Ressourcen der physikalischen Kanäle und der Transport-Kanäle übertragen werden, durch die zuvor zugewiesenen Indizes vorgenommen werden. Sonst wird eine andere Zuordnungsvorschrift vorgegeben. Angegeben wird in jedem Fall weiter u.a. ein Offset zum ersten für die MC Übertragung genutzten Frame und die Länge der CBS Planungs-Periode, d.h., die Anzahl der aufeinanderfolgenden Ressourcen.

Für den Fall, daß die bereits bestehende DRX für CBS um die Funktionalität erweitert wird, MC DRX zu unterstützen, wird ein Informationselement eingeführt, das zur Unterscheidung dient, ob es sich bei den reservierten Ressourcen um Ressourcen für Broadcast oder Multicast Services handelt. Beispielsweise kann der "Nachrichten Typ" dafür genutzt werden, um CBS Nachricht, MC Nachricht, Scheduling Nachricht usw. voneinander zu unterscheiden.

Ein erfindungsgemäßes Verfahren ist durch die Allokierung von Ressourcen an die Größe einer zu versendenden Nachricht sehr flexibel anpaßbar. So können nach einem erfindungsgemäßen Verfahren auch komplexe Nachrichten, wie z.B. Nachrichten mit multimedialem Inhalt, versandt werden, s.g. Multimedia Messages MM. Die vorab übersandten Level 1- und Level 2-Nachrichten zur Planung und Vorbereitung der Übertragung verlangen gegenüber multimedialen Inhalten nach wesentlichen weniger Übertragungsbandbreite. So können die Level 1- und/oder die Level 2-Nachricht über einen relativ schmalbandigen Kanal übertragen werden, wodurch im Fall eines Kommunikationssystems mit mehreren gleichzeitig ablaufenden Übertragungen eine zur Verfügung stehende Gesamtbandbreite sehr effektiv verteilt und/oder zugewiesen werden kann.

Dazu wird in einer nicht weiter dargestellten Ausführungsform der Erfindung Informationselement zur Signalisierung der CBS DRX Level 1-Information gemäß Abbildung von Fig. 4 erweitert bzw. es werden hier neue Informationselemente eingeführt. Durch diese Lösung werden insbesondere unter Berücksichtigung der Rückwärtskompatibilität damit die für die Übertragung von MBMS-Services genutzten Ressource definiert. Gegenüber bekannten Verfahren werden für die Übertragung von MBMS-Services so auch andere physikalische Kanäle als der S-CCPCH, andere Transport- Kanäle als der FACH und auch andere logische Kanäle als der CTCH genutzt.

Durch eine ebenfalls nicht im Detail angegebene Erweiterung des in der Abbildung von Fig. 5 dargestellten Informationselements zur Signalisierung der BMC Scheduling Message nach CBS DRX Level 2 werden die für die Übertragung von MBMS-Services genutzten Ressourcen definiert. Dabei wird insbesondere eine Konfiguration der Ressourcen weitgehend freigegeben. Eigenschaften der physikalischen Kanäle, Transport- Kanäle und logischen Kanäle und die Parameter für die Zuweisung der Ressourcen werden hinzugefügt, so daß nunmehr in weiten Bereich frei angegeben werden kann wann welche der konfigurierten Ressourcen für welche MBMS-GRUPPE allokiert sind.

Hintergrundangaben u.a. zu den in der vorliegenden Anmeldung behandelten Protokollen finden sich zusammengefaßt insbesondere an folgenden Stellen:
[1] 3GPP 25.211, Physical Channels and mapping of transport channels onto physical channels, Release 99
[2] Walke, B.: Mobilfunknetze und ihre Protokolle, Bandl, Teubner Verlag GmbH, Wiesbaden 2000
[3] 3GPP TS 25.331 V3.6.0, RRC Protocol Specification, Release 1999
[4] 3GPP TS 25.324 V3.4.0, Broadcast/Multicast Control BMC, Release 1999

## Patentansprüche

1. Verfahren zum Übertragen von Daten in einem Funkkommunikationssystem mit einer mehrschichtigen Protokollarchitektur von einem Versender über mindestens einen Übertragungskanal an mehrere Empfänger des Funkkommunikationssystems (FCS), wobei mittels ersten Planungsnachrichten über einen ersten separaten Übertragungskanal das Übertragen der Daten angekündigt wird, und mittels zweiter Planungsnachrichten über mindestens einen zweiten Übertragungskanal eine Beschreibungsinformation der Daten übertragen wird,
**dadurch gekennzeichnet, dass**
in den ersten Planungsnachrichten angekündigt wird, zu welchen Zeiten welche der zweiten Übertragungskanäle für die Übertragung der zweiten Planungsnachrichten genutzt werden.

2. Verfahren nach Anspruch 1,
**dadurch gekennzeichnet,**
**dass** es als Erweiterung eines Broadcast Service (CBS) um eine Multimedia-Übertragung und/oder ein Multicast Service, vorzugsweise in Form eines Multimedia Broadcast/Multicast Service (MBMS) ausgeführt wird.

3. Verfahren nach einem der vorhergehenden Ansprüche,
**dadurch gekennzeichnet,**
**daß** den ersten und/oder den zweiten Planungsnachrichten eine Information über eine jeweilige Empfänger-Gruppe, insbesondere Multicast-Gruppe, beigefügt wird.

4. Verfahren nach Anspruch 3 ,
**dadurch gekennzeichnet,**
**daß** Empfänger-Gruppen durch eine Empfänger-Gruppen-Adresse oder eine Empfänger-Gruppen-Identität indiziert werden.

5. Verfahren nach einem der vorhergehenden Ansprüche,
**dadurch gekennzeichnet,**
**daß** eine Zuweisung bzw. Bekanntmachung, wann tatsächlich zweite Planungsnachrichten auf zweiten Übertragungskanälen übertragen werden, auf der Basis zuvor zugewiesener Indizes vorgenommen wird.

6. Sende- und/oder Empfangseinheit,
**dadurch gekennzeichnet,**
**daß** sie zur Umsetzung eines Verfahrens nach einem der vorhergehenden Ansprüche ausgebildet ist.

7. Sende- und/oder Empfangseinheit nach dem vorhergehenden Anspruch,
**dadurch gekennzeichnet,**
**daß** sie als Mobiltelefon ausgebildet ist.

8. Sende- und/oder Empfangseinheit nach einem der vorhergehenden Ansprüche 6 und 7,
**dadurch gekennzeichnet,**
**daß** sie zum Versand und/oder Empfang mit Multimedia Nachrichten (MM) ausgebildet ist.

## Claims

1. Method for transmission of data in a radio communication system using a multilayer protocol architecture from a sender via at least one transmission channel to two or more receivers in the radio communication system (FCS), with the transmission of data being notified by means of the first planning messages via a first separate transmission channel, and description information relating to the data being transmitted by means of second planning messages via at least one second transmission channel,
**characterized in that**
the first planning messages are used to notify the times at which the second transmission channels will be used for the transmission of the second planning messages.

2. Method according to Claim 1,
**characterized**
**in that** the method is an extension to a broadcast service (CBS) by multimedia transmission and/or a multicast service, preferably in the form of a multimedia broadcast/multicast service (MBMS).

3. Method according to one of the preceding claims,
**characterized**
**in that** information about a respective recipient group, in particular multicast group, is attached to the first and/or second planning messages.

4. Method according to Claim 3,
**characterized**
**in that** recipient groups are indicated by a recipient group address or a recipient group identity.

5. Method according to one of the preceding claims,
**characterized**
**in that** previously assigned indices are used as the basis for assigning or notifying when second planning messages are actually transmitted on second transmission channels.

6. Transmitting and/or receiving unit,
**characterized**
**in that** this unit is designed to carry out a method according to one of the preceding claims.

7. Transmitting and/or receiving unit according to the preceding claim,
**characterized**
**in that** this unit is in the form of a mobile telephone.

8. Transmitting and/or receiving unit according to one of the preceding Claims 6 and 7,
**characterized**
**in that** this unit is designed to send and/or receive multimedia messages (MM).

## Revendications

1. Procédé pour la transmission de données dans un système de communication radio avec une architecture de protocole à plusieurs couches d'un émetteur à plusieurs récepteurs du système de communication radio (FCS) au moyen d'au moins un canal de transmission, la transmission des données étant annoncée au moyen de premiers messages de planification via un premier canal de transmission séparé, et une information de description des données étant transmise au moyen de seconds messages de planification via au moins un second canal de transmission,
**caractérisé en ce que**
on annonce dans les premiers messages de planification à quels moments lesquels des seconds canaux de transmission sont utilisés pour la transmission des seconds messages de planification.

2. Procédé selon la revendication 1
**caractérisé en ce que**
il est réalisé en tant qu'extension d'un Broadcast Service (CBS) avec une transmission multimédia et/ou un Multicast Service, de préférence sous la forme d'un Multimédia Broadcast/Multicast Service (MBMS).

3. Procédé selon l'une quelconque des revendications précédentes,
**caractérisé en ce que**
une information concernant un groupe d'émetteurs respectifs, en particulier un groupe Multicast, est jointe aux premiers et/ou aux seconds messages de planification.

4. Procédé selon la revendication 3,
**caractérisé en ce que**
des groupes d'émetteurs sont indicés par une adresse de groupe d'émetteurs et/ou une identité de groupe d'émetteurs.

5. Procédé selon l'une quelconque des revendications précédentes,
**caractérisé en ce que**
on effectue sur la base d'indices attribués auparavant une attribution resp. une notification pour savoir quand des seconds messages de planification seront réellement transmis sur des seconds canaux de transmission.

6. Unité d'émission et/ou de réception,
**caractérisée en ce que**
elle est réalisée pour l'application d'un procédé selon l'une quelconque des revendications précédentes.

7. Unité d'émission et/ou de réception selon la revendication précédente,
**caractérisée en ce que**
elle est réalisée sous la forme d'un téléphone mobile.

8. Unité d'émission et/ou de réception selon l'une quelconque des revendications précédentes 6 et 7,
**caractérisée en ce que**
elle est conçue pour l'envoi et/ou la réception avec des messages multimédia (MM).
